# EUROPEAN PATENT APPLICATION

(11) **EP 4 663 472 A1**
(43) Date of publication of application: **17.12.2025**
(21) Application number: 25180289.8
(22) Date of filing: 02.06.2025
(51) Int. Cl.: B60M 1/04, B60M 1/28, B61L 23/06

(54) **A GROUND ROD DEVICE**

(30) Priority: 28.05.2025 PT 2025120300
(71) Applicant: Somafel - Engenharia e Obras Ferroviárias, S.A., 2740-265 Porto Salvo (PT)
(72) Inventor: SOUSA SANTA BÁRBARA, Sérvulo Manuel, 2740-265 Porto Salvo (PT)
(74) Representative: do Nascimento Gomes, Rui

(57) **Abstract**

It is disclosed a ground rod device (2), comprised of a hook conductor element (4) for installation on a catenary and a ground clamp element (3) for attachment to a rail (1), in which the hook conductor element (4) is detachably connected to the ground clamp element (3). More particularly the ground clamp element (3) comprises an interlocking module adapted to provide retention, release and insertion of the hook conductor element (4) in the ground clamp element (3), and a clamping module configured to attach or detach the ground clamp element (3) to a rail (1). Both modules of the ground clamp element (3) are operationally connected in such a way that the operation of the clamping module to attach or to detach the ground clamp element (3) from a rail (1) triggers the interlocking module to release or retain the hook conductor element (4) on the ground clamp element (3).

## Description

### TECHINCAL FIELD

The present disclosure is enclosed in the field of safety systems in railway infrastructures. More specifically, the present disclosure relates to safety systems applicable when carrying out construction, repair and maintenance work on catenaries, to protect operators from electrical discharges.

### PRIOR ART

A railway infrastructure is made up of a set of structural and functional elements that work together to guarantee the safety, efficiency and functionality of rail transport. Among the fundamental elements of a railway infrastructure are the rails, which are metal structures that form the railway track and support the trains, allowing their movement by connecting them to the catenary, which is responsible for supplying electricity through a system of suspended wires, cables and poles. Catenary is therefore a fundamental system for operating electrified railways and is designed to adapt to the railway line in order to provide permanent contact with a train's pantograph.

Despite being built to be robust, the fact that the catenary projects at altitude makes it vulnerable to various natural risks, such as falling trees or weather-related risks. This implies the execution of continuous preservation and monitoring operations, which play a vital role as any damage to one of the catenary elements may lead to difficulties in the functionality of the whole railway system supplying a certain geographical area.

As the catenary is electrified, these operations must follow a strict safety procedure, which imposes a power cut during operations in order to protect operators from fatal electrical discharges. Specifically, the power cut is carried out by installing ground rods, which is a device made up of a ground clamp for providing ground contact and a hook conductor for installation on the catenary, both of which are connected via a copper cable. The installation of ground rods typically involves carrying out a sequential set of operational steps: firstly, the ground clamp must be grounded and only then the hook conductor may be installed on the catenary, thereby creating a grounding path for dissipating stray currents, which is crucial for the safety and protection of the operators.

However, deadly accidents still occur today as a result of negligence in carrying out the ground rod installation procedure. These fatalities can happen either because of non-compliance with the sequence of steps involved in the ground rod installation procedure, or because of inadequate grounding of the ground clamp.

The present solution intended to innovatively overcome issues.

### SUMMARY OF THE DISCLOSURE

It is the object of the present disclosure a ground rod device, comprised of a hook conductor element for installation on a catenary and a ground clamp element for attachment to a rail, in which the hook conductor element is detachably connected to the ground clamp element.

More particularly the ground clamp element comprises an interlocking module adapted to provide retention, release and insertion of the hook conductor element in the ground clamp element, and a clamping module configured to attach or detach the ground clamp element to a rail. Both modules of the ground clamp element are operationally connected in such a way that the operation of the clamping module to attach or to detach the ground clamp element from a rail triggers the interlocking module to release or retain the hook conductor element on the ground clamp element.

The ground rod device of the present disclosure is therefore projected to allow the hook conductor element to be released from the ground clamp element only when the latter is fixed to the rail, i.e. correctly installed on it. Otherwise, the hook conductor element cannot be released from the ground clamp element. Consequently, this mechanical relationship between this elements favours operator safety by enforcing compliance with the set of sequential steps of the established ground rod installation procedure, making it possible to create a safe ground path for dissipating stray currents when the hook conductor element is installed on a catenary.

### DESCRIPTION OF FIGURES

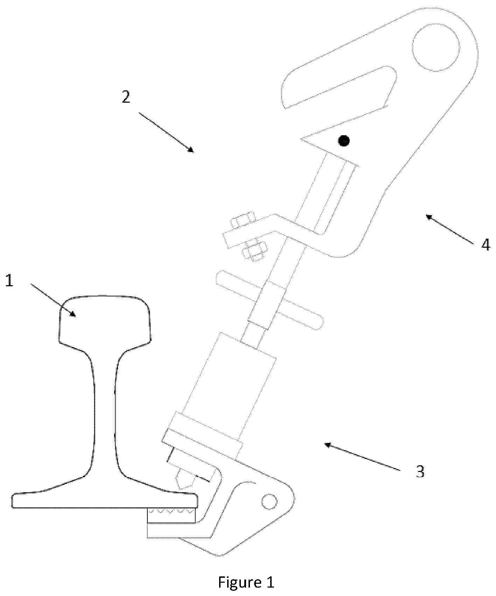

Figure 1 illustrates an embodiment of the ground rod device which is the object of the present disclosure, installed on a rail according to a configuration in which the hook conductor element is inserted into the ground clamp element. The reference signs represent:
   1 - rail;
   2 - ground rod device.

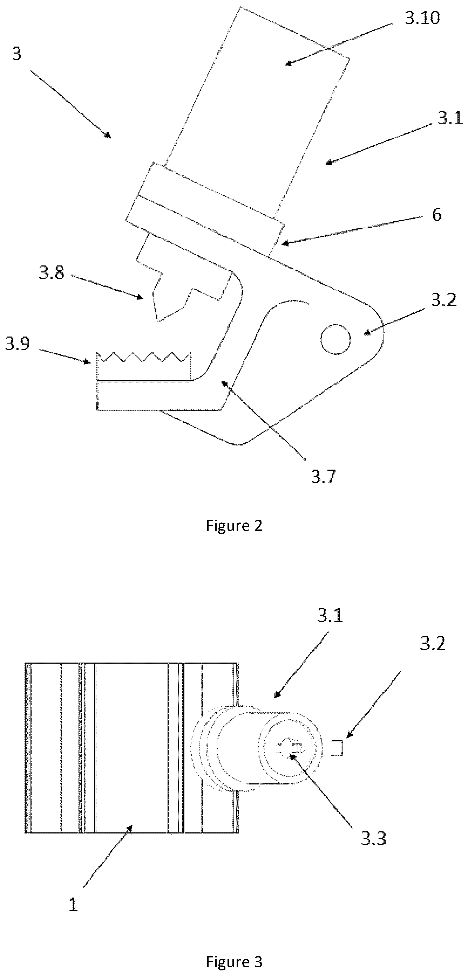

Figure 2 illustrates one embodiment of the ground clamp element, where the reference signs represent:
   3 - ground clamp element;
   3.1- interlocking module;
   3.2 - clamping module;
   3.7 - clamp element;
   3.8 - clamping spindle;
   3.9 - clamping jaw;
   3.10 - protective cylinder.
Figure 3 shows the ground clamp element installed on the rail from a top viewpoint, to illustrate the opening and insertion slot adapted to receive, in the unlocking position, the rod part and the respective guide protrusion of the hook conductor element. The reference signals represent:
   1 - rail;
   3.1- interlocking module;
   3.2 - clamping module;
   3.3 - insertion slot.

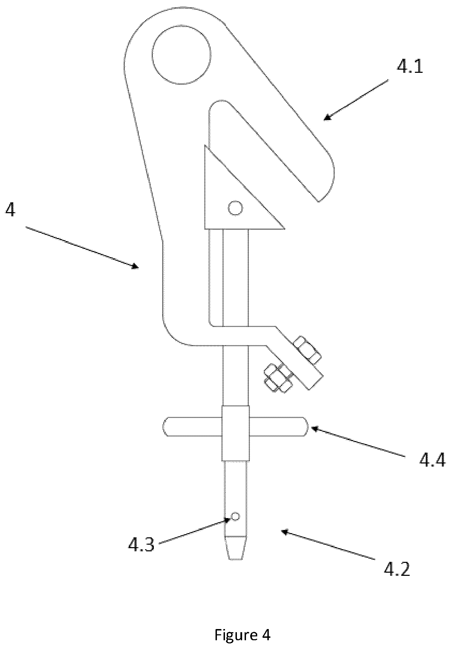

Figure 4 illustrates one embodiment of the hook conductor element, where the reference signs represent:
   4 - hook conductor element;
   4.1 - head part;
   4.2 - rod part;
   4.3 - guide protrusion;
   4.4 - operating handle.

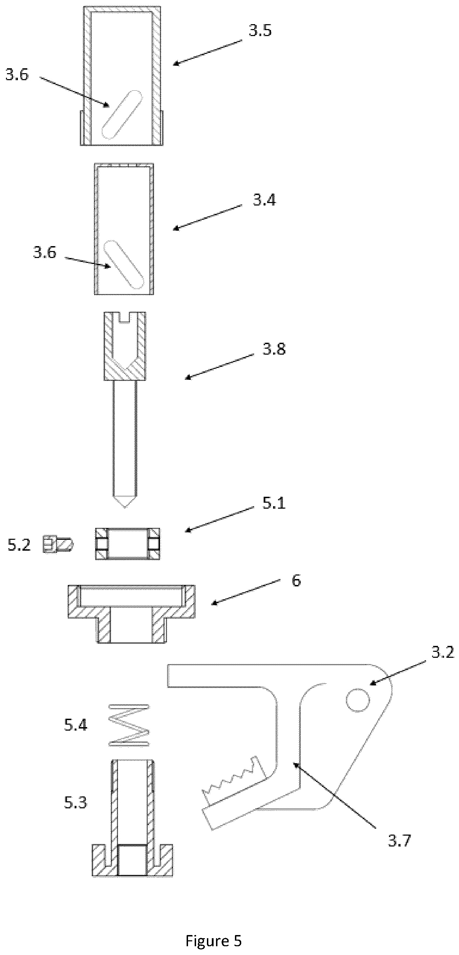

Figure 5 illustrates an exploded view of a ground clamp element embodiment, with the identification of its constituent elements and modules, respecting their order and assembly relationship. The reference signals represent:
   3.2 - clamping module;
   3.4 - inner cylinder;
   3.5 - outer cylinder;
   3.6 - rotation tracks;
   3.7 - clamp element;
   3.8 - clamping spindle;
   5.1 - positioner element;
   5.2 - guiding screws;
   5.3 - guide body;
   5.4 - spring element;
   6 - coupling module;
   The assembly relationship is as follows:
   i. The coupling module (6) is fitted to the clamping module (3.2), for example by means of a threaded insert, from top to bottom.
   ii. Then the spring element (5.4) is fitted to the guide body (5.3) and they are inserted bottom-up into the coupling module (6).
   iii. The positioner element (5.1) is then screwed onto the guide body (5.3).
   iv. The clamping spindle (3.8) is inserted into the guide body (5.3), for example by means of a threaded insert, from top to bottom.
   v. The inner cylinder (3.4) is inserted from the top downwards so that it is free, then the outer cylinder (3.5) is threaded onto the coupling module (6).
   vi. Aligning the rotation tracks (3.6) of the cylinders (3.4, 3.5), the guiding screws (5.2) are fitted to the positioner element (5.1).
   vii. Finally, screw the protective cylinder (3.10) onto the outer cylinder (3.5), shielding the mechanism.

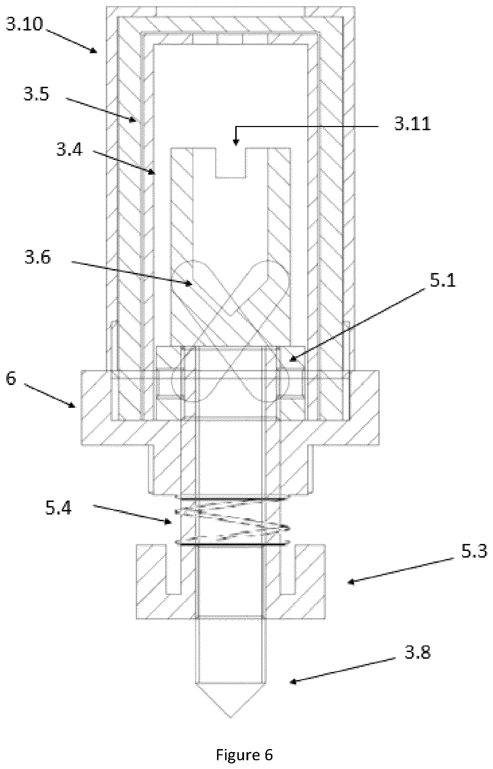

Figure 6 illustrates a realisation of the ground clamp element with all the constituent elements and modules operationally integrated. The reference signals are:
   3.4 - inner cylinder;
   3.5 - outer cylinder;
   3.6 - rotation tracks;
   3.8 - clamping spindle;
   3.10 - protective cylinder;
   3.11 - rod part interface;
   5.1 - positioner element;
   5.3 - guide body;
   5.4 - spring element;
   6 - coupling module.

### DETAILED DESCRIPTION

The more general configurations of the present disclosure are described in the Summary of the disclosure. Such configurations are detailed below in accordance with other advantageous and/or preferred embodiments of implementation of the present disclosure.

It is the object of the present disclosure a ground rod device (2) also known as catenary ground rod device for use, preferably, in intervention operations for the construction and maintenance of railway infrastructures with the need to cut electrical voltage from fixed electrical traction installations.

In particular, the ground rod device (2) described here comprises a hook conductor element (4) and a ground clamp element (3), which are connected via a cable for dissipating stray currents, typically a copper cable. In addition, and in an innovative aspect of the present disclosure, these two elements are mechanically connected to each other in a detachable way, so that the release of the hook conductor element (4) from the ground clamp element (3) is only possible when the latter is correctly fixed to a rail (1). This ensures that the hook conductor element (4) can only be installed on a catenary after the ground clamp element (3) has been correctly installed on the rail (1), creating a safe ground path for the dissipation of stray currents and, consequently, guaranteeing the safety of the operators carrying out the intervention operations.

In order to implement this detachable connection, the ground clamp element (3) comprises an interlocking module (3.1) and a clamping module (3.2). The interlocking module (3.1) is adapted to operate a locking position, which provides retention of the hook conductor element (4) in the ground clamp element (3), and an unlocking position, which enables release or insertion of the hook conductor element (4) into the ground clamp element (3). In it turn, the clamping module (3.2) is configured to provide the attachment and detachment of the ground clamp element (3) from the rail (1). In more detail, the interlocking and clamping modules (3.1, 3.2) are operationally connected in such a way that an operation of the clamping module (3.2) to attach the ground clamp element (3) to the rail (1) triggers the interlocking module (3.1) to switch from the locking position to the unlocking position, thereby enabling the hook conductor element (4) to be released from the ground clamp element (3). In addition, the operation of the clamping module (3.2) to detach the ground clamp element (3) from the rail (1) triggers the interlocking module (3.1) to switch from the unlocking position to the locking position, thereby retaining the hook conductor element (4) in the ground clamp element (3).

This mechanical arrangement between the elements (3, 4) that make up the ground rod device (2) has the additional advantage of enforcing compliance with the ground rod device installation procedure and the completion of all the established installation steps in the correct order, in particular, and as the first step, the installation of the clamp module (3.2) of the ground clamp element (3) on the rail (1), and secondly, the installation of the hook conductor element (4) on the catenary, after it has been released by the interlocking module (3.1) of the ground clamp element (3).

In one embodiment of the ground rod device (2), the hook conductor element (4) may comprise a head part (4.1), suitable for installation on a catenary line, and a rod part (4.2), which connects to the head part (4.1), representing an extension thereof, which is designed to be detachably inserted into the ground clamp element (3), in particular into the interlocking module (3.1). To this end, the rod part (4.2) comprises a guide protrusion (4.3), and the interlocking module (3.1) comprises an opening and an insertion slot (3.3) adapted to receive, in the unlocking position, the rod part (4.2) and the respective guide protrusion (4.3). Therefore, when the interlocking module's insertion slot (3.3) is aligned with the guide protrusion (4.3) of the hook conductor element's rod part (4.2), the interlocking module (3.1) allows the hook conductor element (4) to be released or inserted into the ground clamp element (3). Due to the special mechanical arrangement described herein, this scenario is only possible when the ground clamp element (3) is fixed to the rail (1). When the interlocking module's insertion slot (3.3) is misaligned with the guide protrusion (4.3) of the hook conductor element's rod part (4.2), the interlocking module (3.1) retains the hook conductor element (4) in the ground clamp element (3), preventing it from being released. This scenario occurs when the ground clamp element (3) is not installed on the rail (1) or is incorrectly fixed to it.

More specifically, the relationship between the interlocking module (3.1) and the clamping module (3.2) can be described as follows: the operation of the clamping module (3.2) to attach the ground clamp element (3) to the rail (1) provides alignment between the insertion slot (3.3) of the interlocking module (3.1) and the guide protrusion (4.3) of the hook conductor element rod part (4.2), thereby causing the interlocking module (3.1) to switch from the locking position to the unlocking position. In its turn the operation of the clamping module (3.2) to detach the ground clamp element (3) from the rail (1), provides misalignment between the insertion slot (3.3) of the interlocking module (3.1) and the guide protrusion (4.3) of the hook conductor element rod part (4.2), thereby causing the interlocking module (3.1) to switch from the unlocking position to the locking position.

As a first form of operationalising the locking and unlocking positions of the interlocking module (3.1), the ground rod device (2) may comprise a piston module (5). In such an embodiment of ground rod device (2), the piston module (5) is operatively connected to the interlocking and clamping modules (3.1, 3.2) in such a way that the operation of the clamping module (3.2) to attach the ground clamp element (3) to the rail (1) triggers the piston module (5) which is arranged to provide alignment between the insertion slot (3.3) of the interlocking module (3.1) and the guide protrusion (4.3) of the hook conductor element rod part (4.2). In its turn, the operation of the clamping module (3.2) to detach the ground clamp element (3) from the rail (1) triggers the piston module (5) which is arranged to provide misalignment between the insertion slot (3.3) of the interlocking module (3.1) and the guide protrusion (4.3) of the hook conductor element rod part (4.2).

As a second form of operationalising the locking and unlocking positions of the interlocking module (3.1), such module may comprise two concentric cylinders (3.4, 3.5), arranged one inside the other, and each comprising, on its top face, an opening and an insertion slot (3.3). These cylinders (3.4, 3.5) articulately connected to each other in order to provide rotation of the inner cylinder (3.4) relative to the outer cylinder (3.5) such that the alignment between the respective openings and insertion slots (3.3) define the opening and insertion slot (3.3) of the interlocking module (3.1). With this arrangement for the interlocking module (3.1) the operation of the clamping module (3.2) to attach the ground clamp element (3) to the rail (1) causes the inner cylinder (3.4) to rotate in relation to the outer cylinder (3.5), providing alignment between the respective openings and insertion slots (3.3) and the guide protrusion (4.3) of the hook conductor element rod part (4.2), thereby causing the interlocking module (3.1) to switch from the locking position to the unlocking position. In its turn, the operation of the clamping module (3.2) to detach the ground clamp element (3) from the rail (1), causes the inner cylinder (3.4) to rotate relative to the outer cylinder (3.5), providing misalignment between the respective openings and insertion slots (3.3) and the guide protrusion (4.3) of the hook conductor element rod part (4.2), thereby causing the interlocking module (3.1) to switch from the unlocking position to the locking position.

A third form of operationalising the locking and unlocking positions of the interlocking module (3.1) results from a combination of the two forms of operationalisation described before, wherein the articulation between cylinders (3.4, 3.5) is operationalised by the piston module (5). More particularly, each cylinder (3.4, 3.5) may comprise at least one rotation track (3.6) disposed on its side surface and being arranged in relation to each other so as to enable the rotation of the inner cylinder (3.4) in relation to the outer cylinder (3.5). This rotation is imposed by the piston module (5), which is installed inside the cylinders (3.4, 3.5) and is comprised of a positioner element (5.1) to which are attached guiding screws (5.2) configured to restrict the displacement of the positioner element (5.1) to the rotation tracks (3.6) of the cylinders (3.4, 3.5). More particularly, the actuation of the piston module (5), provided by operation of the clamping module (3.2) to attach or detach the ground clamp element (3) to the rail (1), causes the positioner element (5.1) to move along the rotation tracks (3.6) of the cylinders (3.4, 3.5), providing rotation of the inner cylinder (3.4) in relation to the outer cylinder (3.5).

This third form of operating the locking and unlocking positions of the interlocking module (3.1) has the advantage of being robust by imposing a mechanical and structural relationship between the cylinders (3.4, 3.5) and the piston module (5) as a way of providing alignment between the insertion slot (3.3) and the guide protrusion (4.3) of the hook conductor element rod part (4.2), when the ground clamp element (3) is actuated to fix the ground rod device (2) to the rail (1).

In another embodiment of the ground rod device (2) of the present disclosure, combinable with any of the embodiments already described, the hook conductor element (4) may comprise an operating handle (4.4). In such an embodiment, the hook conductor element (4) and the ground clamp element (3) are operatively connected in such a way that the operation of the operating handle (4.4) of the hook conductor element (4) actuates the clamping module (3.2) of the ground clamp element (3) to attach or detach the ground clamp element (3) from the rail (1), and, consequently, causing the interlocking module (3.1) to operationalise the unlocking and locking positions, respectively.

More particularly, the clamping module (3.2) of the ground clamp element (3) comprises a clamp element (3.7) configured to attach or detach the ground clamp element (3) from the rail (1), and the operating handle (4.4) of the hook conductor element (4) is configured to operate the clamp element (3.7).

This form of realisation adds redundancy to the ground rod device installation procedure, since the operating handle (4.4) that drives the clamping module (3.7) of the ground clamp element (3) is installed on the hook conductor element (4), meaning that the ground clamp element (3) can only be attached and detached from the rail (1) when the hook conductor element (4) is inserted into it.

In connection with any of the embodiments previously described, the clamp element (3.7) of the clamping module (3.2) may comprise a clamping spindle (3.8), and the operating handle (4.4) of the hook conductor element (4) is mechanically arranged to operate the clamping spindle (3.8). In particular, the clamping spindle (3.8) may be provided with a rod part interface (3.11), designed to engage with the rod part (4.2) of the hook conductor element (4), thus establishing a mechanical operational connection between the two elements (3, 4).

Given this mechanical arrangement, the piston module (5) may comprise a guide body (5.3) and a spring element (5.4), so that, the guide body (5.3) is operationally connected to the positioner element (5.1) and the clamping spindle (3.8), and the spring element (5.4) is arranged relative to the guide body (5.3) in such a way that operation of the clamping spindle (3.8) provides for compression or distension of the spring element (5.4). This arrangement causes the positioner element (5.1) of the piston module (5) to move along the rotation tracks (3.6) of the cylinders (3.4, 3.5) thereby providing rotation of the inner cylinder (3.4) in relation to the outer cylinder (3.5), and consequently operating the lock and unlock positions in the interlocking module (3.1). More particularly, the clamp element (3.7) may further comprise a clamping jaw (3.9), and wherein, the operating handle (4.4) of the hook conductor element (4) is mechanically arranged:
- to move the clamping spindle (3.8) towards the clamping jaw (3.9), thus attaching the clamp element (3.7) to the rail (1) and causing the interlocking module (3.1) to operate the unlocking position, thereby allowing the release of the hook conductor element (4) from the ground clamp element (3); and
- to move the clamping spindle (3.8) away from the clamping jaw (3.9), thus detaching the clamp element (3.7) from the rail (1) and causing the interlocking module (3.1) to operate the locking position, thereby preventing the hook conductor element (4) from being released from the ground clamp element (3).

In another embodiment of the ground rod device (2) of the present disclosure, combinable with any of the embodiments already described, it is further comprised by a coupling module (6). Such module is configured to provide an operational connection between the interlocking module (3.1), the piston module (5) and the clamping module (3.2), thereby improving the mechanical and structural relationship between the modules and constituent elements of the ground rod device (2), which is especially important to prevent wear and tear from jeopardising the correct operation of the locking and unlocking positions on the interlocking module (3.1). To this end, the coupling module (6) may comprise coupling means, such as threaded fittings, for coupling to the clamp element (3.7) of the clamping module (3.2) and for coupling to the outer cylinder (3.5) of the interlocking module (3.1). In addition, the coupling module (6) is further provided with means for coupling to the guide body (5.3) of the piston module (5), in such a way as to provide a channel along which the piston module (5), in particular the guide body (5.3), moves, depending on the clamping module (3.2) operation.

Considering this particular arrangement, the spring element (5.4) of the piston module (5) is associated with the guide body (5.3) and is enclosed between a lower barrier of the guide body (5.3) and the coupling module (6), in such a way that:
- the operation of the clamping spindle (3.8) towards the clamping jaw (3.9), in order to attach the clamp element (3.7) to the rail (1), provides for compression of the spring element (5.4) causing the positioner element (5.1) of the piston module (5) to move along the rotation tracks (3.6) of the cylinders (3.4, 3.5) thereby providing rotation of the inner cylinder (3.4) in relation to the outer cylinder (3.5) and the alignment between the respective openings and insertion slots (3.3) and the guide protrusion (4.3) of the hook conductor element rod part (4.2); the end result of this mechanical arrangement is that the interlocking module (3.1) switches from the locking position to the unlocking position, thereby allowing the hook conductor element (4) to be released from the ground clamp element (3).
- the operation of the clamping spindle (3.8) away from the clamping jaw (3.9), in order to detach the clamp element (3.7) from the rail (1), provides for distension of the spring element (5.4) causing the positioner element (5.1) of the piston module (5) to move along the rotation tracks (3.6) of the cylinders (3.4, 3.5) thereby providing rotation of the inner cylinder (3.4) in relation to the outer cylinder (3.5) and the misalignment between the respective openings and insertion slots (3.3) and the guide protrusion (4.3) of the hook conductor element rod part (4.2); the end result of this mechanical arrangement is that the interlocking module (3.1) switches from the unlocking position to the locking position thereby preventing the hook conductor element (4) from being released from the ground clamp element (3).

In another embodiment of the ground rod device (2) of the present disclosure, combinable with any of the embodiments already described, it is further comprised by a protective cylinder (3.10), designed to enclose, at least laterally, the outer cylinder (3.5) of the interlocking module (3.1). Given this realisation, the coupling module (6) may additionally comprise means for coupling to the protective cylinder (3.10). This realisation is particularly advantageous as it prevents dirt from contaminating the mechanical arrangement that controls the operation of the ground rod device (2) described herein.

Of course, the preferred embodiments shown above are combinable, in the different possible forms, being herein avoided the repetition all such combinations.

## Claims

1. A ground rod device (2) comprising a hook conductor element (4) for installation on a catenary and a ground clamp element (3) for attachment to a rail (1); the device (2) being **characterised in that,**
the hook conductor element (4) is detachably connected to the ground clamp element (3), and the ground clamp element (3) comprises:
an interlocking module (3.1) adapted to operate a locking position, which provides retention of the hook conductor element (4) in the ground clamp element (3); and an unlocking position, which enables release or insertion of the hook conductor element (4) into the ground clamp element (3); and
a clamping module (3.2) configured to attach or detach the ground clamp element (3) to a rail (1);
and **in that,**
the interlocking and clamping modules (3.1, 3.2) are operationally connected in such a way that:
an operation of the clamping module (3.2) to attach the ground clamp element (3) to the rail (1) triggers the interlocking module (3.1) to switch from the locking position to the unlocking position, thereby enabling the hook conductor element (4) to be released from the ground clamp element (3); and
an operation of the clamping module (3.2) to detach the ground clamp element (3) from the rail (1) triggers the interlocking module (3.1) to switch from the unlocking position to the locking position, thereby retaining the hook conductor element (4) in the ground clamp element (3).

2. The ground rod device (2) according to claim 1, wherein, the hook conductor element (4) comprises:
- a head part (4.1) suitable for installation on a catenary line and
- a rod part (4.2), connected to the head part (4.1), suitable for insertion into the ground clamp element (3); the rod part (4.2) comprising a guide protrusion (4.3);
and wherein,
the interlocking module (3.1) of the ground clamp element (3) comprises an opening and an insertion slot (3.3), adapted to receive, in the unlocking position, the rod part (4.2) and the respective guide protrusion (4.3) of the hook conductor element (4); and wherein,
the operation of the clamping module (3.2) to attach the ground clamp element (3) to the rail (1) provides alignment between the insertion slot (3.3) of the interlocking module (3.1) and the guide protrusion (4.3) of the hook conductor element rod part (4.2), thereby causing the interlocking module (3.1) to switch from the locking position to the unlocking position; and
the operation of the clamping module (3.2) to detach the ground clamp element (3) from the rail (1), provides misalignment between the insertion slot (3.3) of the interlocking module (3.1) and the guide protrusion (4.3) of the hook conductor element rod part (4.2), thereby causing the interlocking module (3.1) to switch from the unlocking position to the locking position.

3. The ground rod device (2) according to claim 2, comprising a piston module (5); the piston module (5) being operatively connected to the interlocking and clamping modules (3.1, 3.2) such that,
the operation of the clamping module (3.2) to attach the ground clamp element (3) to the rail (1) triggers the piston module (5) which is arranged to provide alignment between the insertion slot (3.3) of the interlocking module (3.1) and the guide protrusion (4.3) of the hook conductor element rod part (4.2); and
the operation of the clamping module (3.2) to detach the ground clamp element (3) from the rail (1) triggers the piston module (5) which is arranged to provide misalignment between the insertion slot (3.3) of the interlocking module (3.1) and the guide protrusion (4.3) of the hook conductor element rod part (4.2).

4. The ground rod device (2) according to claim 2, wherein the interlocking module (3.1) of the ground clamp element (3) comprises two concentric cylinders (3.4, 3.5), arranged one inside the other, and each comprising, on its top face, an opening and an insertion slot (3.3); the cylinders (3.4, 3.5) being articulately connected to each other in order to provide rotation of the inner cylinder (3.4) relative to the outer cylinder (3.5) such that the alignment between the respective openings and insertion slots (3.3) define the opening and insertion slot (3.3) of the interlocking module (3.1);
and wherein,
the operation of the clamping module (3.2) to attach the ground clamp element (3) to the rail (1) causes the inner cylinder (3.4) to rotate in relation to the outer cylinder (3.5), providing alignment between the respective openings and insertion slots (3.3) and the guide protrusion (4.3) of the hook conductor element rod part (4.2), thereby causing the interlocking module (3.1) to switch from the locking position to the unlocking position; and
the operation of the clamping module (3.2) to detach the ground clamp element (3) from the rail (1), causes the inner cylinder (3.4) to rotate relative to the outer cylinder (3.5), providing misalignment between the respective openings and insertion slots (3.3) and the guide protrusion (4.3) of the hook conductor element rod part (4.2), thereby causing the interlocking module (3.1) to switch from the unlocking position to the locking position.

5. The ground rod device (2) according to claims 3 and 4, wherein the articulation between the cylinders (3.4, 3.5) is operationalised by the piston module (5), wherein:
each cylinder (3.4, 3.5) comprises at least one rotation track (3.6) on its side; the rotation tracks (3.6) of each cylinder (3.4, 3.5) are arranged in relation to each other so as to enable the rotation of the inner cylinder (3.4) in relation to the outer cylinder (3.5); and wherein,
the piston module (5) being installed inside the cylinders (3.4, 3.5) and comprising a positioner element (5.1) to which are attached guiding screws (5.2) configured to restrict the displacement of the positioner element (5.1) to the rotation tracks (3.6) of the cylinders (3.4, 3.5), in such a way that
the actuation of the piston module (5) causes the positioner element (5.1) to move along the rotation tracks (3.6) of the cylinders (3.4, 3.5), providing rotation of the inner cylinder (3.4) in relation to the outer cylinder (3.5).

6. The ground rod device (2) according to any of the previous claims,
wherein
the hook conductor element (4) comprises an operating handle (4.4), and
the hook conductor element (4) and the ground clamp element (3) are operatively connected in such a way that the operation of the operating handle (4.4) of the hook conductor element (4) actuates the clamping module (3.2) of the ground clamp element (3) to attach or detach the ground clamp element (3) from the rail (1).

7. The ground rod device (2) according to claims 6, wherein
the clamping module (3.2) of the ground clamp element (3) comprises a clamp element (3.7) configured to attach or detach the ground clamp element (3) from the rail (1); and
the operating handle (4.4) of the hook conductor element (4) is configured to operate the clamp element (3.7).

8. The ground rod device (2) according to claims 5 to 7, wherein
the clamp element (3.7) comprises a clamping spindle (3.8);
the operating handle (4.4) of the hook conductor element (4) being mechanically arranged to operate the clamping spindle (3.8);
and wherein the piston module (5) comprises:
a guide body (5.3) operationally connected to the positioner element (5.1) and the clamping spindle (3.8); and
a spring element (5.4) arranged relative to the guide body (5.3) in such a way that operation of the clamping spindle (3.8) provides for compression or distension of the spring element (5.4) causing the positioner element (5.1) of the piston module (5) to move along the rotation tracks (3.6) of the cylinders (3.4, 3.5) thereby providing rotation of the inner cylinder (3.4) in relation to the outer cylinder (3.5).

9. The ground rod device (2) according to claim 8, wherein the clamp element (3.7) further comprises a clamping jaw (3.9), and wherein,
the operating handle (4.4) of the hook conductor element (4) being mechanically arranged to:
move the clamping spindle (3.8) towards the clamping jaw (3.9), thus attaching the clamp element (3.7) to the rail (1);
move the clamping spindle (3.8) away from the clamping jaw (3.9), thus detaching the clamp element (3.7) from the rail (1).

10. The ground rod device (2) according to claims 8 or 9, comprising:
a coupling module (6) configured to provide an operational connection between the interlocking module (3.1), the piston module (5) and the clamping module (3.2); wherein,
the coupling module (6) comprises coupling means for coupling to the clamp element (3.7) of the clamping module (3.2) and to the outer cylinder (3.5) of the interlocking module (3.1); and means for coupling to the guide body (5.3) of the piston module (5) in such a way as to provide a channel along which the guide body (5.3) moves, depending on the clamping module (3.2) operation;
and wherein
the spring element (5.4) of the piston module (5) being associated with the guide body (5.3), and being enclosed between a lower barrier of the guide body (5.3) and the coupling module (6).

11. The ground rod device (2) according to claim 10, comprising a protective cylinder (3.10), designed to enclose, at least laterally, the outer cylinder (3.5) of the interlocking module (3.1); the coupling module (6) additionally comprising means for coupling to the protective cylinder (3.10).

12. The ground rod device (2) according to claims 10 or 11, wherein the coupling means of the coupling module (6) for coupling to the clamp element (3.7) and to the outer cylinder (3.5) of the interlocking module (3.1) are threaded fittings.

13. The ground rod device (2) according to any of the previous claims, wherein the hook conductor element (4) and the ground clamp element (3) are connected to each other via a copper cable.
